Europäisches Patentamt

European Patent Office

Office européen des brevets

(11) Publication number: **0 264 655**
**A2**

# EUROPEAN PATENT APPLICATION

(21) Application number: **87114002.6**

(22) Date of filing: **24.09.87**

(51) Int. Cl.⁴: **C08F 214/08** , C08L 27/08 ,
C09D 5/08 , C09D 3/74 ,
//(C08F214/08,220:06)

(30) Priority: **22.10.86 JP 249751/86**

(43) Date of publication of application:
**27.04.88 Bulletin 88/17**

(84) Designated Contracting States:
**DE FR GB IT**

(71) Applicant: **KUREHA KAGAKU KOGYO
KABUSHIKI KAISHA**
**9-11 Horidome-cho 1-chome Nihonbashi
Chuo-ku
Tokyo 103(JP)**

(72) Inventor: **Suzuki, Masayasu**
**No. 43-6, Yanagi-machi Ushiroda-machi
Iwaki-shi Fukushima(JP)**
Inventor: **Segawa, Susumu**
**No. 269-1, Kamiyama Iwama-machi
Iwaki-shi Fukushima(JP)**
Inventor: **Tomizawa, Toshikazu**
**No. 70-2; Eguri 2-chome Nishiki-machi
Iwaki-shi Fukushima(JP)**

(74) Representative: **Patentanwälte Grünecker,
Kinkeldey, Stockmair & Partner
Maximilianstrasse 58
D-8000 München 22(DE)**

(54) **Rust preventive coating composition.**

(57) Provided is a rust preventive coating composition comprising, in terms of solids, 100 parts by weight of a vinylidene chloride latex and 0.5 - 50 parts by weight of a tannic substance. The vinylidene chloride latex is obtained by emulsion-polymerizing in the presence of an anionic emulsifier a monomer mixture composed of 20 - 95 wt.% of vinylidene chloride, 5 - 80 wt.% of a monomer copolymerizable with vinylidene chloride and 0.1 - 5 wt.% of an ethylenically-unsaturated carboxylic acid. The rust preventive coating composition exhibits superb rust preventive effects when applied to iron and iron alloys. Although the vinylidene chloride latex is acidic, it is not coagulated by the addition of the tannic substance so that the tannic substance is contained in a state dispersed stably. Good leveling effects are also obtained owing to the inclusion of the unsaturated carboxylic acid component in the vinylidene chloride latex.

# RUST PREVENTIVE COATING COMPOSITION

## BACKGROUND OF THE INVENTION

1) Field of the Invention:

This invention relates to a rust preventive coating composition suitable for use in coating a surface of iron or an iron alloy in order to prevent occurrence of rust.

2) Description of the Prior Art:

As rust preventive methods for iron and its alloys, coating of a rust preventive paint, plating, electrolytic protection and like measures have been known in general. It is widely practised to apply a rust preventive paint for its readiness in work and its economy in order to protect large metal products and metallic structural materials, such as vehicles, ships, bridges and tanks, from rusting.

Rust preventive paints known to date are however insufficient in various respects. Rust preventive effects which they can exhibit are affected by the surface conditions of articles to be coated. They cannot achieve perfect prevention of occurrence of rust on articles coated therewith, since their rust preventive effects are affected, for example, by the degree of surface ruggedness or roughness of the articles to be coated or by substances still remaining on the surfaces of the articles to be coated or properties of the paints themselves are insufficient.

As rust preventive paints for iron and its alloys, those containing tannin or tannic acid as a component are presently known as disclosed in Japanese Patent Laid-Open Nos. 139155/1982 and 149966/1983 by way of example. However, their rust preventive performance is by no means satisfactory.

The present inventors have carried out an extensive investigation with respect to rust preventive paints. As a result, it has been found that a rust preventive paint is supposed to have the following properties in order to show excellent rust preventive performance.

(1) The rust preventive paint should have surface-cleaning effects, for example, should be able to dissolve rust on the surface of an article to be coated.

(2) The rust preventive paint should have strong adhesion to the surface of an article to be coated.

(3) The resulting coating film should have excellent barrier properties against external moisture and oxygen.

(4) On the metal surface of an article to be coated, the rust preventive paint and the metal should bond together so that a so-called "passive-state substance" is formed there.

No rust preventive paint equipped with all the above properties have however been known to date.

## SUMMARY OF THE INVENTION

An object of this invention is to provide a rust preventive coating composition having such properties as mentioned above.

In one aspect of this invention, there is thus provided a rust preventive coating composition comprising, in terms of solids, 100 parts by weight of a vinylidene chloride latex obtained by emulsion-polymerizing in the presence of an anionic emulsifier a monomer mixture composed of 20 - 95 wt.% of vinylidene chloride, 5 - 80 wt.% of a monomer copolymerizable with vinylidene chloride and 0.1 - 5 wt.% of an ethylenically-unsaturated carboxylic acid; and 0.5 - 50 parts by weight of a tannic substance.

The rust preventive coating composition of this invention can exhibit superb rust preventive effects when applied to a surface of iron or an iron alloy. Since the vehicle in the rust preventive coating composition is an acidic latex of a vinylidene chloride copolymer emulsion-polymerized in the presence of the anionic emulsifier, the resulting coating film has excellent barrier properties and the coating composition also has substantial cleaning effects for the surface of an article to be coated. Moreover, the tannic substance is contained in a state dispersed stably without coagulation of the vinylidene chloride latex. As a consequence, the rust preventive effects inherent to the tannic substance are also exhibited fully. The rust preventive coating composition also has good leveling effects because the monomer mixture for the vinylidene chloride latex contains the unsaturated carboxylic acid as one of its components.

## DETAILED DESCRIPTION OF THE INVENTION AND PREFERRED EMBODIMENT

In the present invention, the above-described specific vinylidene chloride latex is used as the entire portion or a portion of a vehicle. This vinylidene chloride latex is obtained by emulsion-polymerizing a monomer mixture which is composed of 20 - 95 wt.% of vinylidene chloride, 5 - 80 wt.% of a monomer copolymerizable with vinylidene chloride and 0.1 - 5 wt.% of an ethylenically-unsaturated carboxylic acid, especially, in the presence of an anionic emulsifier and pH of the latex ranges from about 1.5 to about 3.

The proportion of vinylidene chloride is 20 - 95 wt.%, preferably, 50 - 93 wt.% in the monomer mixture for obtaining the vinylidene chloride latex. A vinylidene chloride proportion smaller than 20 wt.% will result in a latex having low acidity, so that the cleaning effects of the resulting coating composition for the surface of an article to be coated will be reduced and the adhesion of the resulting coating film to the surface of the article will be poor. A vinylidene chloride proportion of 50 wt.% or greater is preferred, since the resulting coating formulation can form a coating film having sufficient barrier properties against moisture and oxygen. If the proportion of vinylidene chloride should exceed 95 wt.%, the resulting vinylidene chloride copolymer will be prone to crystallize rapidly so that latex particles will harden in a short period of time after preparation of the latex and the film-forming ability will hence become insufficient.

As the monomer copolymerizable with vinylidene chloride, may be used one or more vinyl or vinylidene monomers selected from methyl acrylate, ethyl acrylate, propyl acrylate, butyl acrylate, 2-ethylhexyl acrylate, octyl acrylate, methyl methacrylate, acrylonitrile, methacrylonitrile, vinyl chloride, vinyl acetate, styrene, glycidyl acrylate, glycidyl methacrylate and the like. It is preferred to use glycidyl acrylate or methacrylate, which has crosslinkablity, as the entire portion or a portion of such a monomer, because the resulting coating film has excellent toughness. The proportion of the copolymerizable monomer is 5 - 80 wt.%, preferably, 7 - 50 wt.% of the monomer mixture.

As a further component for composing the monomer mixture along with vinylidene chloride and the monomer copolymerizable with vinylidene chloride, the ethylenically-unsaturated carboxylic acid is added. Owing to the incorporation of the ethylenically-unsaturated carboxylic acid, the leveling property of the coating composition has been improved. Acrylic or methacrylic acid may be used suitably as the ethylenically-unsaturated carboxylic acid. The proportion of the ethylenically-unsaturated carboxylic acid is 0.1 - 5 wt.% with 0.5 - 2.0 wt.% being preferred. If the proportion of the carboxylic acid should be less than 0.1 wt.% or the carboxylic acid is not contained at all as a component, a coating composition poor in coatability will be obtained. If this proportion should exceed 5 wt.%, latex particles will show insufficient stability in the polymerization reaction. Any proportions outside the above range are therefore not preferred.

The vinylidene chloride latex useful in the practice of this invention is prepared by emulsion-polymerizing the monomer mixture of the above-described monomers and has pH ranging from 1.5 to 3. Here, the polymerization of the monomer mixture can be achieved, as the simplest procedure, by emulsion-polymerizing the whole portion of the monomer mixture in one step.

The vinylidene chloride latex can be prepared in accordance with a polymerization technique, in which the monomer mixture is divided into plural, for example, two portions, the first portion of the monomer mixture is emulsion-polymerized in the presence of an anionic emulsifier, and the second portion of the monomer mixture is added to the resulting vinylidene chloride latex, followed by emulsion polymerization in the presence of the anionic emulsifier. In this case, the second portion of the monomer mixture may be divided further into plural smaller portions and these smaller portions are successively added and emulsion-polymerized. Such a multi-step polymerization process is preferable, since the size control of latex particles to be formed is easy.

Incidentally, the term "divided" as used herein should be interpreted in a broad sense. It is hence not an essential requirement that the divided plural portions of the monomer mixture have the same composition. The term "divided" should hence be interpreted to embrace such a situation that the monomer mixture is divided into plural portions of different compositions. It is however essential that each of the divided portions of the monomer mixture contains at least both vinylidene chloride and monomer copolymerizable with vinylidene chloride.

An emulsifier is used in emulsion polymerization. In order to obtain the vinylidene chloride latex in this invention, an anionic emulsifier must be used as the emulsifier. Specifically, sodium dodecylbenzenesulfonate, sodium laurylsulfate, sodium alkylnaphthalenesulfonate, sodium alkyldiphenyletherdisulfonate, sodium dialkylsulfosuccinate, sodium alkylsulfonate and other anionic emulsifiers may be used suitably. The anionic emulsifier may be added at once in its entirety or may be added in several portions. The anionic emulsifier may be used in an amount of 0.1 - 3.0 parts by weight, which is similar to the amount range in a usual polymerization reaction for obtaining a vinylidene chloride latex. The smaller the more desirable, so long as the stability of latex particles is assured.

If an emulsifier of a different kind, for example, a non-ionic surfactant should be used instead of an anionic emulsifier or together with an anionic emulsifier, latex particles will coagulate when the resulting vinylidene chloride latex is mixed with a tannic substance to be described subsequently. It will hence be impossible to obtain any rust preventive coating composition having practical utility.

In the above-mentioned emulsion polymerization of the monomer mixture, the polymerization yield is as high as substantially 100%. The composition of the resultant copolymer is thus substantially equal to the composition of the monomer mixture.

The rust preventive coating composition of this invention can be obtained by combining, in terms of solids, 0.5 - 50 parts by weight, preferably, 2.0 - 20 parts by weight of the tannic substance with 100 parts by weight of the above-obtained vinylidene chloride latex of pH 1.5 - pH 3 directly, namely, without adjusting the pH of the latter. Other additives may also be added to the rust preventive coating composition as needed.

By the term "tannic substance" as used herein, tannin or tannic acid is meant. Tannin is a substance having a molecular weight of about 600 - 2,000 and contains polyoxyphenyl as its basic structural unit. Tannic acid is a hydrolyzable tannin. Typical examples of tannic acid may include gallotannin, Chinese gallo tannin and nutgalls-tannin. The tannic substance is added to the vinylidene chloride latex either as is or in the form of an aqueous solution. When coated on the surface of an article, the tannic substance bonds to a metal of the article, especially, iron to form a chemically stable chelate, namely, a passive-state substance, whereby excellent rust preventive effects are exhibited.

If the proportion of the tannic substance added should be smaller than 0.5 parts by weight, the formation of a chelate will not be achieved to any sufficient extent so that good rust preventive effects cannot be obtained. If its proportion should be in excess of 50 parts by weight on the other hand, the resulting coating composition can form only coating films of reduced strength and is also disadvantageous economically.

As exemplary additives which may be added to the rust preventive coating composition of this invention, may be mentioned a film-forming aid formed of carbitol or the like and employed to improve the film-forming property at low temperatures such as 0 - 10°C, thickener, plasticizer, pigment, silica, clay, etc.

The vehicle of the rust preventive coating composition of this invention is formed of the vinylidene chloride copolymer obtained from the monomer mixture of the specific composition. Accordingly, the resulting coating film has extremely good barrier properties. Since the vinylidene chloride copolymer latex is acidic owing to the inclusion of hydrochloric acid, excellent cleaning effects are exhibited for the surface of the article to be coated and strong adhesion to the surface of the article is assured. Owing to the inclusion of the tannic substance, the tannic substance bonds chemically to the metal surface of the article so that a passive-state substance is formed. As a result of these effects, it is possible to obtain extremely good rust preventive effects. Moreover, the vinylidene chloride copolymer as the vehicle is in the form of the latex obtained by emulsion polymerization in the presence of the anionic emulsifier. In spite of its strong acidity (pH: about 1.5 - 3), the latex does not undergo coagulation even when mixed with the tannic substance so that the stable coating composition is formed. In addition, the latex serves sufficiently as a vehicle and impart excellent coating property. It is very surprising that the strongly acidic vinylidene chloride copolymer exhibits, as the vehicle of the rust preventive coating composition, superb rust preventive effects in cooperation with the tannic substance, although an acidic substance generally accelerates occurrence of rust. Good leveling effects are also obtained because the vinylidene chloride latex contains the unsaturated carboxylic acid as one of its components.

[Examples]

Examples of this invention will hereinafter be described. It should however be borne in mind that the present invention is not necessarily limited to the following Examples. In the following Examples, all designations of "part" or "parts" mean part or parts by weight.

Example 1:

(1) Preparation of Vinylidene Chloride Latex A:

First step:

| | parts |
|---|---|
| Deionized water | 80 |
| Sodium alkyldiphenyletherdisulfonate ("Newcoal 271A", trade name; product of Nippon Nyukazai Co., Ltd.) | 0.15 |
| Potassium persulfate | 0.01 |
| Sodium hydrogensulfite | 0.01 |

The above materials were charged in a glass-lined autoclave equipped with stirring blades, followed by thorough purging of the interior of the autoclave with nitrogen gas. The following materials were then charged additionally under pressure, and the contents were stirred at 45°C for 6 hours to conduct emulsion polymerization, thereby preparing a latex.

| | parts |
|---|---|
| Vinylidene chloride | 18 |
| Methyl acrylate | 2 |

Second step:

The following materials were added under pressure to the latex obtained in the first step.

| | parts |
|---|---|
| Deionized water | 10 |
| Sodium alkyldiphenyletherdisulfonate ("Newcoal 271A") | 0.15 |
| Potassium persulfate | 0.02 |
| Sodium hydrogensulfite | 0.01 |
| Vinylidene chloride | 35 |
| Methyl acrylate | 3.0 |
| Glycidyl methacrylate | 2.0 |

The contents were stirred at 45°C for 10 hours to conduct emulsion polymerization, thereby preparing a latex.

Third step:

The following materials were added under pressure to the latex obtained in the second step.

|  | parts |
|---|---|
| Deionized water | 10 |
| Sodium alkyldiphenyletherdisulfonate | 0.15 |
| ("Newcoal 271A") | |
| Potassium persulfate | 0.02 |
| Sodium hydrogensulfite | 0.01 |
| Vinylidene chloride | 35 |
| Ethyl acrylate | 3.5 |
| Glycidyl methacrylate | 1.0 |
| Acrylic acid | 0.5 |

The contents were stirred at 45°C for 10 hours to conduct emulsion polymerization, thereby obtaining the intended Vinylidene Chloride Latex A. The polymerization yield was approximately 99.9% and the pH was 2.1.

(2) Mixing:

Six parts of tannic acid was added as a 25% aqueous solution to 100 parts of Vinylidene Chloride Latex A, both, in terms of solids, whereby Rust Preventive Coating Composition 1 of this invention was produced.

(3) Evaluation:

Iron plates of 7 cm wide, 15 cm long and 1 mm thick were separately brush-coated with Rust Preventive Coating Composition 1, followed by drying at 20°C. The above procedure was repeated to form a coating film of 40 μm thick.

Immediately after the coating, the coating composition once turned to a milky white color. After drying, the resultant coating was in a mat form with extremely minute ruggedness. Thereafter, it soon turned to a black color.

The above changes may be explained as follows. The coating composition was subjected to abrupt salting-out on the surface of the iron plate due to iron ions dissolved because of the acidity of the coating composition. As a result, the resultant coating film was become matted. At the same time, a fresh surface was exposed on the surface of the iron plate. The tannic acid immediately bonded to the fresh surface to form a chelate, so that the color of the coating film turned to black.

The thus-coated iron plates were subjected to a water proofness test and salt water resistant test respectively in accordance with the methods prescribed in JIS K 5400 7.2 and 7.6. One of the coated iron plates was immersed for 48 hours in water of 40°C in the water proofness test, while the other coated iron plate was dipped for 96 hours in salt water of 20°C. No abnormality was observed in both tests. Occurrence of red rust was still unobserved even when immersed for 800 hours in salt water.

Example 2:

Rust Preventive Coating Composition 2 of this invention was produced by adding 1.0 parts of tannic acid to 100 parts of Vinylidene Chloride Latex A, both, in terms of solids.

Iron plates were coated in the same manner as in Example 1 except for the use of Rust Preventive Coating Composition 2. Their color changes were similar to those observed in Example 1 except that 3 - 4 days were needed until they turned to a black color. Abnormality was observed in neither water proofness test nor salt water resistant test.

Example 3:

Vinylidene Chloride Latex B was obtained by conducting emulsion polymerization in exactly the same manner as in Example 1 except that the proportions of the monomers employed respectively in the first, second and third steps were changed as will be described next. The polymerization yield was approximately 99.7% and the pH was 2.0.

### First step:

|  | parts |
|---|---|
| Vinylidene chloride | 10 |
| Ethyl acrylate | 9.0 |
| Glycidyl methacrylate | 1.0 |

### Second step:

|  | parts |
|---|---|
| Vinylidene chloride | 25 |
| Ethyl acrylate | 13.5 |
| Glycidyl methacrylate | 1.0 |
| Acrylic acid | 0.5 |

### Third step:

|  | parts |
|---|---|
| Vinylidene chloride | 25 |
| Ethyl acrylate | 13.5 |
| Glycidyl methacrylate | 1.0 |
| Acrylic acid | 0.5 |

Rust Preventive Coating Composition 3 was produced by adding tannic acid in the same manner as in Example 1 except for the use of Vinylidene Chloride Latex B.

Iron plates were coated in the same manner as in Example 1 except for the use of Rust Preventive Coating Composition 3. Findings were the same as those observed in Example 1. Abnormality was observed in neither water proofness test nor salt water resistant test.

Example 4:

|  | parts |
|---|---|
| Deionized water | 85 |
| Sodium dodecylbenzenesulfonate | 0.5 |
| Potassium persulfate | 0.02 |
| Sodium hydrogensulfite | 0.01 |

The above materials were charged in a glass-lined autoclave equipped with stirring blades, followed by thorough purging of the interior of the autoclave with nitrogen gas. The following materials were then charged additionally under pressure, and the contents were stirred at 45°C for 6 hours.

|  | parts |
|---|---|
| Vinylidene chloride | 91 |
| Methyl acrylate | 8.0 |
| Acrylic acid | 1.0 |

The following materials were then charged further under pressure, and the contents were stirred at 45°C for 10 hours.

|  | parts |
|---|---|
| Deionized water | 10 |
| Sodium dodecylbenzenesulfonate | 1.0 |

The following materials were thereafter charged additionally under pressure.

|  | parts |
|---|---|
| Deionized water | 5 |
| Potassium persulfate | 0.03 |
| Sodium hydrogensulfite | 0.02 |

The contents were stirred at 45°C for further 10 hours to conduct emulsion polymerization, so that Vinylidene Chloride Latex C was obtained. The polymerization yield was approximately 99.1% and the pH was 2.3.

8

Rust Preventive Coating Composition 4 was produced by adding tannic acid in the same manner as in Example 1 except for the use of Vinylidene Chloride Latex C.

Iron plates were coated in the same manner as in Example 1 except for the use of Rust Preventive Coating Composition 4. Findings were the same as those observed in Example 1. Abnormality was observed in neither water proofness test nor salt water resistant test.

Comparative Example 1:

Following the procedure of Example 1, iron plates were coated with Vinylidene Chloride Latex A prepared in Example 1 as was as a coating formulation. Transparent coating films were formed. Those coated iron plates were subjected respectively to the same water proofness test and salt water resistant test as those conducted in Example 1. In both tests, occurrence of pale yellow flecks of 1 - 2 cm across was observed.

Comparative Example 2:

A comparative latex free of vinylidene chloride as a component was prepared in the following manner.

### First step:

|  | parts |
|---|---|
| Deionized water | 80 |
| Sodium alkyldiphenyletherdisulfonate ("Newcoal 271A") | 0.15 |
| Potassium persulfate | 0.01 |
| Sodium hydrogensulfite | 0.01 |

The above materials were charged in a glass-lined autoclave equipped with stirring blades, followed by thorough purging of the interior of the autoclave with nitrogen gas. The following materials were then charged additionally under pressure, and the contents were stirred at 45°C for 10 hours to conduct emulsion polymerization, thereby preparing a latex.

|  | parts |
|---|---|
| Styrene | 4.0 |
| Methyl methacrylate | 6.0 |
| Butyl acrylate | 10.0 |

Second step:

The following materials were added under pressure to the latex obtained in the first step.

|  | parts |
|---|---|
| Deionized water | 25 |
| Sodium alkyldiphenyletherdisulfonate ("Newcoal 271A") | 0.15 |
| Potassium persulfate | 0.01 |
| Sodium hydrogensulfite | 0.005 |

The following materials were also added under pressure.

|  | parts |
|---|---|
| Styrene | 8.0 |
| Methyl methacrylate | 10.0 |
| Butyl acrylate | 20.0 |
| Glycidyl methacrylate | 2.0 |

The contents were stirred at 45°C for 10 hours to conduct emulsion polymerization, thereby preparing a latex.

10

## Third step:

The following materials were added under pressure to the latex obtained in the second step.

| | parts |
|---|---|
| Deionized water | 25 |
| Sodium alkyldiphenyletherdisulfonate ("Newcoal 271A") | 0.15 |
| Potassium persulfate | 0.02 |
| Sodium hydrogensulfite | 0.01 |
| Styrene | 8.0 |
| Methyl methacrylate | 10.5 |
| Butyl acrylate | 20.0 |
| Glycidyl methacrylate | 1.0 |
| Methacrylic acid | 0.5 |

The contents were stirred at 45°C for 10 hours to conduct emulsion polymerization, thereby obtaining the a comparative latex. The pH of the comparative latex was 4.

A comparative coating composition was produced by adding tannic acid in the same manner as in Example 1 except for the use of the comparative latex.

In the same manner as in Example 1 except for the use of the comparative coating composition, an iron plate was coated and dried to give a dry film thickness of 40 μm. A salt water resistant test was then conducted in the same manner as in Example 1. After an elapsed time of about 50 hours, occurrence of red rust was observed over the entire surface of the iron plate.

Comparative Example 3:

A comparative latex was obtained in the same manner as in Example 1 except that the following non-ionic emulsifier was used instead of the anionic emulsifier as an emulsifier for the emulsion polymerization in the second and third steps.

Emulsifier for the second step:
Polyoxyethylene nonylphenyl ether 1.5 parts
("Emulgen 930", trade name;
product of Kao Atlas Corp.)

Emulsifier for the third step:
Polyoxyethylene nonylphenyl ether 1.0 parts
("Emulgen 930")

The polymerization yield was approximately 98.7% and the pH was 2.4.

When an aqueous solution of 2.0 parts solids of tannic acid were added to 100 parts solids of the comparative latex, the latex underwent coagulation.

0 264 655

Comparative Example 4:

A comparative latex free of any ethylenically-unsaturated carboxylic acid as a component was prepared in the same manner as in Example 1 except that the monomers for the third step were changed as shown below.

Monomers for the third step:
Vinylidene chloride     35 parts
Ethyl acrylate          4 parts
Glycidyl methacrylate   1 part

Tannic acid was added to the comparative latex in the same manner as in Example 1. Iron plates were coated with the resulting coating composition. The resulting coating films were all very rough. The coating composition was hence improper as a paint.

## Claims

1. A rust preventive coating composition comprising, in terms of solids, 100 parts by weight of a vinylidene chloride latex obtained by emulsion-polymerizing in the presence of an anionic emulsifier a monomer mixture composed of 20 - 95 wt.% of vinylidene chloride, 5 - 80 wt.% of a monomer copolymerizable with vinylidene chloride and 0.1 - 5 wt.% of an ethylenically-unsaturated carboxylic acid; and 0.5 - 50 parts by weight of a tannic substance.

2. The rust preventive coating composition as claimed in Claim 1, wherein the vinylidene chloride latex has been obtained by emulsion-polymerizing in the presence of the anionic emulsifier a monomer mixture composed of 50 - 93 wt.% of vinylidene chloride, 7 - 50 wt.% of the monomer copolymerizable with vinylidene chloride and 0.5 - 2.0 wt.% of the ethylenically-unsaturated carboxylic acid.

3. The rust preventive coating composition as claimed in Claim 1, wherein the monomer copolymerizable with vinylidene chloride is glycidyl acrylate or methacrylate.

4. The rust preventive coating composition as claimed in Claim 1, wherein the ethylenically-unsaturated carboxylic acid is acrylic or methacrylic acid.

5. The rust preventive coating composition as claimed in Claim 1, wherein the tannic substance is contained in a proportion of 2.0 - 20 parts by weight per 100 parts by weight of the vinylidene chloride latex, both, in terms of solids.

6. The rust preventive coating composition as claimed in Claim 1, wherein the tannic substance is tannin or tannic acid.

7. The rust preventive coating composition as claimed in Claim 1, wherein the pH of the vinylidene chloride latex is 1.5 - 3.

8. The rust preventive coating composition as claimed in Claim 1, wherein the coating composition is suitable for use in coating a surface of iron or an iron alloy.

9. A process for the production of a rust preventive coating composition, which comprises the following steps:

preparing a vinylidene chloride latex of pH 1.5 - pH 3 in accordance with a polymerization technique including a step of emulsion-polymerizing in the presence of an anionic emulsifier a monomer mixture composed of 20 - 95 wt.% of vinylidene chloride, 5 - 80 wt.% of a monomer copolymerizable with vinylidene chloride and 0.1 - 5 wt.% of an ethylenically-unsaturated carboxylic acid; and

adding 0.5 - 50 parts by weight of a tannic substance to 100 parts by weight of the vinylidene chloride latex, both, in terms of solids.

10. The process as claimed in Claim 9, wherein the vinylidene chloride latex of pH 1.5 - pH 3 is prepared in accordance with a polymerization technique including the following steps:

dividing the monomer mixture into plural portions each of which contains at least both vinylidene chloride and monomer copolymerizable with vinylidene chloride; and

emulsion-polymerizing the thus-divided portions of the monomer mixture successively in the presence of the anionic emulsifier by the multi-step polymeriza tion method.

12